# EUROPEAN PATENT APPLICATION

(11) **EP 3 939 941 A1**
(43) Date of publication of application: **19.01.2022**
(21) Application number: 19918821.0
(22) Date of filing: 11.03.2019
(51) Int. Cl.: C02F 3/12, C02F 1/00

(54) **OPERATION MANAGEMENT SYSTEM FOR WASTEWATER TREATMENT FACILITY**

(71) Applicant: Gohda Water Treatment Technology Co., Inc., Tokyo 104-0041 (JP)
(72) Inventor: GOHDA, Toshihisa, Tokyo 104-0041 (JP)
(74) Representative: Brand Murray Fuller LLP
(86) International application number: PCT/JP2019/009726
(87) International publication number: WO 2020/183576

(57) **Abstract**

This invention relates to an operation management system, a diagnostic method, and an operation management method for a wastewater treatment facility which uses activated sludge. The operation management system for a wastewater treatment facility includes: a storage means for storing a reference value for each index of a plurality of indexes indicating a state of an aeration tank; an input means for inputting a measured value of the index; a comparison means for comparing the input measured value with the reference value for each index, and categorizing each measured value as one of being within a reference value range, over the reference value, or less than the reference value; a storage means for storing diagnostic patterns, in which the diagnostic patterns are classified according to a combination of categories of: within the reference value range, over the reference value, or less than the reference value for each index, using the reference value as a reference; a checking means for checking a combination of categories of each index of the measured values against a combination of categories of each index of the diagnostic patterns, and extracting a diagnostic pattern which the combination of categories has matched; and a display means for displaying the diagnostic pattern which the combination of categories has matched.

## Description

### Technical Field

The present invention relates to an operation management system, a diagnostic method, and an operation management method for a wastewater treatment facility which uses activated sludge.

### Background Art

In recent years, issues concerning the global environment have been the focus of attention, and awareness regarding the importance of water has been increasing. Therefore, there is an increasing necessity to properly maintain and manage the operation of wastewater treatment facilities. The typical treatment flow in a wastewater treatment facility is as follows. First, wastewater passes through equipment (screening equipment) which separates out coarse waste at a pretreatment stage. Here, an SS portion that flows in needlessly is removed. Next, biological treatment that is the core of the purification process is performed. Here, air that is required in order for microorganisms to act is pumped into the wastewater by aeration (air blowing/aerating). Lastly, the purified water and the microorganisms are separated, and the treated water purified is disinfected and then discharged into a river or the like. The primary objective in a wastewater treatment facility is to restore generated wastewater so that the quality of the water is the same as or better than the quality of the water before it was used, and then discharge the restored water. The general criterion with respect to the quality of discharged water is that the quality of the water is stably within the discharged water quality standards set by government. In the coming era, the existence of water will be important and valuable not only for human survival but also from an economic viewpoint. However, current methods and systems for maintaining and managing the operation of wastewater treatment facilities are extremely inadequate. The only measuring instruments that many wastewater treatment facilities are equipped with are pH meters and SV meters, and the usage of these measuring instruments is generally only for the purpose of determining what is the right level of pH and what is the right level of SV. Further, even among wastewater treatment facilities which are equipped with various measuring instruments, there are many facilities in which the measuring instruments and measured values are not effectively utilized, and maintenance and management of the operation of the wastewater treatment facility depends on the experience and intuition of the person in charge. For example, Japanese unexamined Patent Application Publication No. 11-90480 discloses an operation management system for managing operation of an aeration tank by controlling the rotation speed of an aeration blower or an intermittent aeration system, in which a DO meter is installed in an oxidation ditch and operation is managed based on measured values of DO. However, it cannot be said that application of this system which uses only measured values of DO to aeration tanks in general is an appropriate operation management method as described above. Because the circumstances surrounding the operation management of wastewater treatment facilities is as described above, there are cases where the operation of a wastewater treatment facility sometimes falls into an unstable state periodically or suddenly, and since it takes at the earliest two weeks and in longer cases around two months to restore operation of the wastewater treatment facility, situations in which water must be discharged even though the water does not meet the water quality standards and situations in which activated sludge overflows occur.

### Prior Art Document

### Patent Document

Patent Document 1: Japanese unexamined Patent Application Publication No. 11-90480

### Summary of the Invention

### Object to be Solved by the Invention

An objective of the present invention is to solve the problem described above and provide an operation management system for a wastewater treatment facility which can appropriately maintain and manage the operation of a wastewater treatment facility without relying on the experience and intuition of a person, as well as a diagnostic method for a wastewater treatment facility that can appropriately ascertain the state of a wastewater treatment facility, and an operation management method which utilizes the operation management system and the diagnostic method.

### Means to Solve the Object

In wastewater treatment facilities, biological treatment by microorganisms is the core treatment, and a large number of microorganisms of various kinds are present in activated sludge that is used in the wastewater treatment facilities. Consequently, it is difficult to theoretically elucidate changes in the activated sludge that is a mass of microorganisms, and furthermore the environment that surrounds each wastewater treatment facility, for example, the kind and amount of an inflow load, the state of activated sludge, and the climate such as the temperature and humidity, differs for each treatment facility. These are the main reasons why appropriate methods for maintaining and managing the operation of wastewater treatment facilities have not been developed. By examining and observing a large number of wastewater treatment facilities of many kinds, the present inventor collected, from various angles, data and information pertaining to phenomena that occur before a stable treatment state in a wastewater treatment facility becomes an unstable treatment state, and data and information pertaining to phenomena that occur during the process of an unstable treatment state changing toward a stable state. The present inventor then focused on the following: the fact that appropriate conditions differ for each wastewater treatment facility; the fact that in order to accurately ascertain the state of activated sludge and adopt appropriate maintenance and improvement measures it is necessary to make a determination based on a combination of a plurality of indexes such as SV30, SV comparative difference, SV 24 hours, pH, ORP, sludge ORP and transparency; and the fact that the state of activated sludge is determined by the relationship between the three factors of the inflow load amount, the activated sludge amount, and the oxygen amount. Then, upon conducting further studies, the present inventor discovered that the states of activated sludge can be patterned according to combinations of whether each of the inflow load amount, the activated sludge amount, and the oxygen amount is appropriate, excessive or insufficient, respectively, and if the relationships between the various indexes are set in advance in correspondence with the patterns, a relevant pattern can be determined from among the patterns based on the measurement results of the various indexes, and thus the state of the activated sludge can be easily ascertained. Specifically, the present inventor discovered that by setting a reference value for each index, and creating categories of being within a reference value range, more than the reference value, and less than the reference value, it suffices to associate combinations of the respective indexes categorized in this manner with the aforementioned patterns, and with regard to the reference values, it suffices to set reference values for each wastewater treatment facility. Thus, each index can be measured, and a combination of categories obtained by comparing the measured values with the reference values can be checked against combinations of categories of indexes associated with the aforementioned patterns so that a pattern which matches the current state of the activated sludge can be selected, and hence an operation management system can be obtained which can ascertain the current state of a wastewater treatment facility without relying on the experience and intuition of a person as has happened heretofore, and also more accurately than heretofore. Further, according to this operation management system, since ascertainment of the current state of a wastewater treatment facility is performed from the viewpoints of the appropriateness of the three factors of inflow load amount, activated sludge amount, and oxygen amount, it becomes easier to take measures going forward such as increasing or decreasing any of the inflow load amount, the activated sludge amount and the oxygen amount. The present invention has been completed in this way.

That is, the present invention is specified by the matters described below.
(1) An operation management system for a wastewater treatment facility, comprising: a storage means for storing a reference value for each index of a plurality of indexes indicating a state of an aeration tank; an input means for inputting a measured value of the index; a comparison means for comparing the input measured value with the reference value for each index, and categorizing each measured value as one of being within a reference value range, over the reference value, or less than the reference value; a storage means for storing diagnostic patterns, in which the diagnostic patterns are classified according to a combination of categories of: within the reference value range, over the reference value, or less than the reference value for each index, using the reference value as a reference; a checking means for checking a combination of categories of each index of the measured values against a combination of categories of each index of the diagnostic patterns, and extracting a diagnostic pattern which the combination of categories has matched; and a display means for displaying the diagnostic pattern which the combination of categories has matched.
(2) The operation management system according to (1) above, wherein the plurality of indexes indicating a state of an aeration tank are two or more selected from SV30, SV comparative difference, SV 24 hours, pH, ORP, sludge ORP, and transparency level.
(3) The operation management system according to (1) or (2) above, wherein the diagnostic patterns are classified from a viewpoint of appropriateness, excess or insufficiency for each of inflow load amount, activated sludge amount, and oxygen amount.
(4) The operation management system according to any one of (1) to (3) above, wherein SV external appearance observation is included as an index.
(5) The operation management system according to any one of (1) to (4) above, wherein a display of the diagnostic pattern includes a display of appropriateness, excess or insufficiency for each of inflow load amount, activated sludge amount and oxygen amount.
(6) The operation management system according to any one of (1) to (5) above, wherein the display of the diagnostic pattern includes a display of a future countermeasure method that is set for each diagnostic pattern.
(7) A diagnostic method for a wastewater treatment facility, comprising: a step of setting a reference value for each index of a plurality of indexes indicating a state of an aeration tank; a step of taking the reference value as a reference, and setting diagnostic patterns that are classified according to a combination of categories of being within a reference value range, over the reference value, or less than the reference value for each index; a step of measuring the index and obtaining a measured value; a step of comparing the obtained measured value with the reference value for each index, and categorizing each measured value as one of being within the reference value range, over the reference value, or less than the reference value; a step of checking a combination of categories of each index of the measured value against a combination of categories of each index of the diagnostic patterns; and a step of adopting a diagnostic pattern which combinations of categories have matched in the checking step, as a diagnosis result.
(8) A diagnostic method for a wastewater treatment facility, comprising: a step of selecting at least three from SV30, SV comparative difference, SV 24 hours, pH, ORP, sludge ORP, and transparency as index indicating a state of an aeration tank; a step of setting a reference value for the selected indexes; a step of measuring the selected indexes and obtaining measured values; a step of comparing the obtained measured values with the reference value for each index and categorizing each measured value into one of being within a reference value range, over the reference value, or less than the reference value; a step of selecting one or more of: excessive load, appropriate load, insufficient load, excessive sludge amount, appropriate sludge amount, insufficient sludge amount, excessive oxygen, appropriate oxygen amount, and insufficient oxygen, as a possibility indicated by each index from the categories; and a step diagnosing a state of the wastewater treatment facility from a viewpoint of appropriateness, excess or insufficiency of each of inflow load amount, activated sludge amount and oxygen amount, by considering the possibilities selected for each index as a whole.
(9) An operation management method for a wastewater treatment facility, comprising increasing or decreasing an oxygen amount, increasing or decreasing an extracted sludge amount, and/or increasing or decreasing an inflow load amount, based on a diagnosis result obtained by the diagnostic method according to (7) or (8) above.
(10) An operation management apparatus for a wastewater treatment facility, comprising: an input device that inputs a reference value for each index of a plurality of indexes indicating a state of an aeration tank, and a storage device that stores the input reference value; an input device that inputs a measured value of the index and a storage device that stores the input measured value; a comparison means for comparing the input and stored measured value with the reference value for each index, and categorizing each measured value as one of being within a reference value range, over the reference value, or less than the reference value; a storage device that stores a diagnostic pattern, in which the diagnostic patterns are classified according to a combination of categories of: within the reference value range, over the reference value, or less than the reference value for each index, using the reference value as a reference; a checking means for checking a combination of categories of each index of the measured values against a combination of categories of each index of the diagnostic patterns, and extracting a diagnostic pattern which the combination of categories has matched; and a display device that displays the diagnostic pattern which the combination of categories has matched.

### Effects of the Invention

According to the operation management system and diagnostic method for a wastewater treatment facility of the present invention, by merely measuring indexes that were selected in advance and inputting the measurement results, the state of activated sludge in a wastewater treatment facility can be ascertained. Further, because the state of activated sludge can be grasped from multiple viewpoints, an accurate evaluation can be obtained. According to the operation management system and operation management method for a wastewater treatment facility of the present invention, since a countermeasure is selected based on a diagnosis result obtained by the present invention, an appropriate countermeasure can be implemented for maintaining the healthy state of activated sludge and for stable operation of the wastewater treatment facility.

### Brief Description of Drawings

[Figure 1] Figure 1 is a view illustrating one embodiment of diagnostic patterns in the present invention.
[Figure 2] Figure 2 is a view illustrating one embodiment of the diagnostic patterns in the present invention.
[Figure 3] Figure 3 is a view illustrating one embodiment of a display of the diagnostic pattern in the present invention.
[Figure 4] Figure 4 is a view illustrating one embodiment of a display that shows changes by day in the diagnostic pattern in the present invention.

### Mode of Carrying Out the Invention

The operation management system for a wastewater treatment facility of the present invention is characterized by comprising: a storage means for storing a reference value for each index of a plurality of indexes indicating a state of an aeration tank; an input means for inputting a measured value of the index; a comparison means for comparing the input measured value with the reference value for each index, and categorizing each measured value as one of being within a reference value range, over the reference value, or less than the reference value; a storage means for storing diagnostic patterns, in which the diagnostic patterns are classified according to a combination of categories of: within the reference value range, over the reference value, or less than the reference value for each index, using the reference value as a reference; a checking means for checking a combination of categories of each index of the measured values against a combination of categories of each index of the diagnostic patterns, and extracting a diagnostic pattern which the combination of categories has matched; and a display means for displaying the diagnostic pattern which the combination of categories has matched. First, the operation management system of the present invention includes storage means for, with respect to a plurality of indexes indicating a state of an aeration tank, storing a reference value for each of the indexes. The plurality of indexes indicating a state of an aeration tank in the present invention are preferably two kinds or more, and more preferably three kinds or more, selected from SV30, SV comparative difference, SV 24 hours, pH, ORP, sludge ORP, and transparency. The term "SV30" refers to the proportion of sediment obtained after one liter of activated sludge dispersion (aeration tank water) taken from inside a final aeration tank (biological treatment tank) is poured into a 1 liter graduated cylinder and let stand for 30 minutes, and represents the proportion as a percentage, and the term "SV 24 hours" refers to the proportion of sediment obtained after activated sludge dispersion is let stand for 24 hours according to the same method, and represents the proportion as a percentage. The term "SV comparative difference" refers to a value obtained when two SV meters are prepared, 30% (300 mL) of final aeration tank water is poured into each of the SV meters, 70% (700 mL) of water is then poured into one of the SV meters to make 100% (1 L) and 70% (700 mL) of water in a deoxygenated state (deoxygenated water) is poured into the other SV meter to make 100% (1 L), and the difference between the measured values of the two SV meters after 30 minutes is determined. The term "pH" refers to the pH of the final aeration tank water. The term "ORP", which stands for oxidation-reduction potential, refers to a value obtained when the final aeration tank water is allowed to stand and supernatant water that precipitated and separated is measured, and "sludge ORP" refers to a value obtained when the inside of settled sludge that precipitated and separated as described above is measured. The transparency is generally represented by a depth (cm) at which two lines having a width of 1 mm can be seen separately, and is determined by measuring the final treated water using a transparency meter. These indexes can be measured utilizing conventionally known methods that are commonly used in wastewater treatment facilities. Since the appropriate values of these indexes will differ for each wastewater treatment facility, reference values are set for each facility at which operation management is to be performed. With regard to a method for setting the reference values, for example, each index is measured for one month, the measured values when the state of the treated water is stable are determined, and the reference value (range of the reference values) is set by taking an upper limit value and a lower limit value of the measured values at a time at which the state of the treated water becomes unstable as an appropriate range. The reference values that are set are stored in the storage means.

The operation management system of the present invention includes input means for inputting measured values of the indexes, and comparison means for comparing the measured values that are input with the reference values for each of the indexes, and categorizing the respective measured values as being one of within the reference value range, more than the reference value, and less than the reference value. In the operation management system of the present invention, measured values that are input by the input means are compared with the reference values by the comparison means, and are each categorized as one of being within the reference value range (the measured value is within the range of the reference values: hereunder, also referred to simply as "appropriate"), more than the reference value (the measured value is greater than the range of the reference values: hereunder, also referred to simply as "more than"), and less than the reference value (the measured value is smaller than the range of the reference values: hereunder, also referred to simply as "less than"). On the other hand, the operation management system of the present invention includes storage means for storing diagnostic patterns, in which, taking the reference values as references, the diagnostic patterns are classified according to a combination of the categories of being within the reference value range, more than the reference value, or less than the reference value for each of the indexes. The term "combination of categories" refers to, for example, a combination such as that SV30 is "more than", pH is "more than", and ORP is "less than" (hereunder, in the aforementioned case, the combination of categories is also represented as [SV30, pH, ORP] = [more than, more than, less than]). By considering the states indicated by the respective indexes compared with the states of the reference values from multiple viewpoints by means of a plurality of indexes, the state of the relevant aeration tank can be accurately ascertained, and the state of the aeration tank can be classified into a diagnostic pattern. The operation management system of the present invention includes checking means for checking a combination of categories of each index of the measured values against combinations of categories of each index of the diagnostic patterns, and extracting a diagnostic pattern with respect to which the combination of categories matched. In the checking means, for example, in a case where the combination of categories for measured values that were input is [SV30, pH, ORP] = [more than, more than, less than], since the combination of categories matches with a diagnostic pattern in which, similarly, [SV30, pH, ORP] = [more than, more than, less than], the diagnostic pattern in question is extracted from among diagnostic patterns that were set in advance and stored. The operation management system of the present invention includes display means for displaying the diagnostic pattern with respect to which the combination of categories matched.

In the operation management system of the present invention, preferably the diagnostic patterns are classified from the viewpoint of appropriateness, excess or insufficiency with respect to each of an inflow load amount, an activated sludge amount, and an oxygen amount. Three major factors in wastewater treatment are the inflow load amount, the activated sludge amount, and the oxygen amount, and the balance between these three factors is important. With regard to each of the inflow load amount, the activated sludge amount, and the oxygen amount, the term "appropriate" indicates that the relevant amount is an appropriate amount, the term "excess" indicates that the relevant amount exceeds an appropriate amount, and the term "insufficient" indicates that the relevant amount is less than an appropriate amount. In the present invention, diagnostic patterns are classified from the viewpoint of appropriateness, excess or insufficiency with respect to each of the inflow load amount, the activated sludge amount, and the oxygen amount, and preferably a combination of categories of more than, less than, and within a range of various indexes corresponding to the diagnostic patterns classified in this manner are assigned to each of the diagnostic patterns. By ascertaining the state of a wastewater treatment facility by means of the aforementioned three factors, it becomes easy to establish guidelines regarding future countermeasure methods, such as increasing or decreasing the oxygen amount, increasing or decreasing the extracted sludge amount, or increasing or decreasing the inflow load amount. For example, in a case where the SV30 measured value is more than the reference value range, it indicates that bulking of activated sludge has occurred, and activated sludge bulking occurs not only due to excessive oxygen, but also due to insufficient oxygen or an excessive load. In the measurement of SV30, temporary bulking of activated sludge is severely expressed in the volume. Since there is no such temporary fluctuation in the SV 24 hours measurement, by means of the SV 24 hours measurement, it can be confirmed whether the SV30 has bulked. Further, the numerical value of ORP shows a criterion for the oxygen amount, and serves as a criterion for determining if there is excessive oxygen or an excessive load. By combining these indexes, it can be determined what the current state of the activated sludge is from the viewpoints of the inflow load amount, the activated sludge amount, and the oxygen amount. In addition, changes in the pH represent changes in the treatment state of the aeration tank. With regard to the transparency, it is generally considered that when the color of the supernatant water is bright and has a degree of transparency, there is an insufficient load or excessive oxygen, while when the color of the supernatant water is dark and the transparency is poor, it can be considered that there is an excessive load, insufficient oxygen, or insufficient sludge. The SV comparative difference indicates, for example, a state in which an SV meter containing water has supplied further oxygen to the activated sludge because oxygen is sufficiently dissolved in the water. In a case where the measured value for SV containing water (hereinafter, also referred to as "SV (water)") is slightly higher than the measured value for SV containing deoxygenated water (hereinafter, also referred to as "SV (deoxygenated water)"), on the condition that there is a stable load state and a stable activated sludge amount state, it can be determined that the oxygen state of the activated sludge is appropriate (appropriate dissolved oxygen state), while in a case where the difference is large, it can be determined that there is excessive oxygen in the activated sludge.

For example, diagnostic patterns classified from the viewpoint of appropriateness, excess or insufficiency with respect to each of the inflow load amount, the activated sludge amount and the oxygen amount, and combinations of the categories of being within the reference value range, more than the reference value, and less than the reference value of various indexes can be associated as follows. For example, with regard to a case where the SV comparative difference is "more than", ORP is "more than", and transparency is "less than" (pattern 1), a decrease in the transparency occurs when the load is untreated, and also occurs due to the influence of sludge that disintegrated. However in this case, because the ORP is high, it is considered that treatment of the load proceeded and resulted in excessive oxygen, and the SV comparative difference also indicates excessive oxygen. Therefore, by combining the aforementioned three kinds of indexes, it can be diagnosed that the current state is one in which an excessive oxygen environment is continuing and the activated sludge is suffering damage and autolysis is occurring. When this state is classified from the viewpoint of appropriateness, excess or insufficiency with respect to each of the inflow load amount, the activated sludge amount, and the oxygen amount, although the respective amounts of the inflow load amount, the activated sludge amount, and the oxygen amount are appropriate, the state is one in which the balance between these three factors in the activated sludge has been lost, and therefore in order to grow healthy activated sludge, it is necessary to give a sufficient load or to carefully control the oxygen amount. Here, the phrase "SV comparative difference is more than" refers to a case where the value for SV (water) is greater than the value for SV (deoxygenated water) by an amount equal to or greater than the set reference value, the phrase "SV comparative difference is less than" refers to a case where the value for SV (water) is less than the value for SV (deoxygenated water) by an amount equal to or greater than the set reference value, and the phrase "SV comparative difference is appropriate" refers to a case where the difference between the value for SV (water) and the value for SV (deoxygenated water) is within the set reference value range. Further, with regard to a case where SV 24 hours is "more than", the pH is "appropriate" (case where a nitrogen component in the load is small), and the sludge ORP is "appropriate" (pattern 2), since the pH and the sludge ORP are appropriate, the load is being treated, however because SV 24 hours is "more than", it can be diagnosed that SS is tending to increase. When this state is classified from the viewpoint of appropriateness, excess or insufficiency with respect to each of the inflow load amount, the activated sludge amount, and the oxygen amount, although the inflow load amount, the activated sludge amount and the oxygen amount are appropriate amounts, because SS is tending to increase, it is necessary to increase the amount of excess sludge extracted and the oxygen amount to grow useful activated sludge. Further, with regard to a case where SV30 is "more than", pH is "more than" (case where a nitrogen component in the load is large), and ORP is "more than" (pattern 3), although in a case where SV30 is "more than" it is considered that the oxygen amount is high and the activated sludge amount is small, the fact that the pH is "more than" indicates that the load is not being treated, and the fact that the ORP is high indicates that the state is one in which there is excessive oxygen. Therefore, although there is excessive oxygen, it can be diagnosed that the state is one in which there is some untreated load remaining due to the insufficiency of activated sludge (insufficient activated sludge (excessive oxygen)). When this state is classified from the viewpoints of appropriateness, excess and insufficiency with respect to each of the inflow load amount, the activated sludge amount, and the oxygen amount, it can be classified that the inflow load amount is appropriate, the activated sludge amount is insufficient, and the oxygen amount is excessive. Thus, in cases where there is a possibility that a differentiation cannot be made or that an erroneous differentiation will be made when respective indexes are utilized independently, it is possible to make an appropriate diagnosis by combining a plurality of indexes as in the present invention. In addition, a pattern classified from the viewpoint of appropriateness, excess or insufficiency with respect to each of the inflow load amount, the activated sludge amount, and the oxygen amount can be associated with a combination of the categories of being within the reference value range, more than the reference value, or less than the reference value of various indexes, and if this is patterned in advance as a pattern that indicates the state of the oxygen amount, the current state can be ascertained easily and appropriately by checking against combinations of categories obtained by comparing measured values of various indexes with the reference values.

In the operation management system of the present invention, a display of the diagnostic patterns preferably includes a display showing appropriateness, excess or insufficiency with respect to each of the inflow load amount, the activated sludge amount, and the oxygen amount. When the aforementioned display is included, the current state of the wastewater treatment facility is conveyed to the utilizer (user) of the operation management system in a way that is easy to understand. By using such simple and clear expressions, the current state of the wastewater treatment facility can be conveyed to the utilizer easily and without misunderstanding. In the operation management system of the present invention, a display of diagnostic patterns preferably includes a display of a future countermeasure method that is set for each diagnostic pattern. If countermeasure methods that correspond to the diagnostic patterns are set in advance, the countermeasure methods are also displayed together with the diagnostic patterns, and therefore the utilizer of the system can not only ascertain the current state of the wastewater treatment facility, but can also know the future countermeasure method. In the operation management system of the present invention, preferably SV 24-hours external appearance observation is included as an index. In the case of SV 24-hours external appearance observation, categorization is not performed according to whether a measured value is within, more than, or less than a range in comparison to a reference value, and instead categorization can be performed according to the degree of sludge flotation in an SV test, the presence or absence of filamentous bacteria, the length of filamentous bacteria, or the like. When using the SV 24-hours external appearance observation as an index, the state of the SV 24-hours external appearance observation is added as a condition for classifying the diagnostic patterns. An observation from the viewpoint of denitrification and an observation from the viewpoint of filamentous bacteria are included in the SV 24-hours external appearance observation. In the case of adding the SV 24-hours external appearance observation to the indexes, preferably at least four kinds of indexes are selected as indexes to be used from among all the indexes.

The diagnostic method for a wastewater treatment facility of the present invention is characterized by comprising: a step of setting a reference value for each index of a plurality of indexes indicating a state of an aeration tank; a step of taking the reference value as a reference, and setting diagnostic patterns that are classified according to a combination of categories of being within a reference value range, over the reference value, or less than the reference value for each index; a step of measuring the index and obtaining a measured value; a step of comparing the obtained measured value with the reference value for each index, and categorizing each measured value as one of being within the reference value range, over the reference value, or less than the reference value; a step of checking a combination of categories of each index of the measured value against a combination of categories of each index of the diagnostic patterns; and a step of adopting a diagnostic pattern which combinations of categories have matched in the checking step, as a diagnosis result. Indexes in the diagnostic method for a wastewater treatment facility of the present invention are preferably selected from SV30, SV comparative difference, SV 24 hours, pH, ORP, sludge ORP, and transparency, and preferably two kinds or more, more preferably three kinds or more, are selected from these indexes. Further, SV 24-hours external appearance observation may be added to the indexes to be measured and the indexes for classifying the diagnostic patterns. In a case of the SV 24-hours external appearance observation, categorization is not performed according to whether a measured value is within, more than, or less than a range in comparison to a reference value, and instead categorization is performed according to the degree of sludge flotation in an SV test, the presence or absence of filamentous bacteria, the length of filamentous bacteria, or the like. An observation from the viewpoint of denitrification and an observation from the viewpoint of filamentous bacteria are included in the SV 24-hours external appearance observation. In a case of adding SV 24-hours external appearance observation to the indexes, preferably at least three kinds, more preferably at least four kinds, of indexes are selected as indexes to be used from among all of the indexes to which the SV 24-hours external appearance observation was added. With regard to setting of the reference values, setting of the diagnostic patterns, setting of the indexes, the comparison between the measured values and the reference values and the categories of the measured values, and checking of measurement results against diagnostic patterns and extracting the diagnostic pattern, these settings and the like are performed in a similar manner to the case of the operation management system of the present invention that is described above.

The diagnostic method for a wastewater treatment facility of the present invention is characterized by comprising: a step of selecting at least three from SV30, SV comparative difference, SV 24 hours, pH, ORP, sludge ORP, and transparency as index indicating a state of an aeration tank; a step of setting a reference value for the selected indexes; a step of measuring the selected indexes and obtaining measured values; a step of comparing the obtained measured values with the reference value for each index and categorizing each measured value into one of being within a reference value range, over the reference value, or less than the reference value; a step of selecting one or more of: excessive load, appropriate load, insufficient load, excessive sludge amount, appropriate sludge amount, insufficient sludge amount, excessive oxygen, appropriate oxygen amount, and insufficient oxygen, as a possibility indicated by each index from the categories; and a step diagnosing a state of the wastewater treatment facility from a viewpoint of appropriateness, excess or insufficiency of each of inflow load amount, activated sludge amount and oxygen amount, by considering the possibilities selected for each index as a whole. Further, similarly to the diagnostic method for a wastewater treatment facility that is described above, SV 24-hours external appearance observation may be added to the indexes to be measured and the indexes for classifying diagnostic patterns, and the way in which categorization is performed in such case is also the same as described in the above diagnostic method, and in the case of adding SV 24-hours external appearance observation to the indexes, it is preferable that at least three kinds or four kinds are selected as indexes to be used from among all the indexes. As described above with regard to the aforementioned operation management system, based on the results obtained by comparing the measurement results and the reference values of the indexes, as possibilities which the respective indexes indicate, one or more possibilities can be selected from excessive load, appropriate load, insufficient load, excessive sludge amount, appropriate sludge amount, insufficient sludge amount, excessive oxygen, appropriate oxygen amount and insufficient oxygen. Because a measurement result for a single index indicates a plurality of possibilities, it is difficult to determine the state of activated sludge based on only a single index. In the diagnostic method for a wastewater treatment facility of the present invention, since determination is made in a comprehensive manner based on the measurement results for a plurality of indexes by comparing the measurement results of the respective indexes with each other, if the possibilities indicated by the respective indexes match, it can be confirmed that the wastewater treatment facility is in that state, and if the possibilities do not match, an appropriate determination can be made by making a determination in a comprehensive manner with respect to the circumstances or the causes of the mismatch between the possibilities. By this means, the state of the activated sludge can be accurately grasped. Furthermore, since the possibilities indicated by the respective indexes that are described above relate to appropriateness, excess or insufficiency of the inflow load amount, the activated sludge amount and the oxygen amount, the state of a wastewater treatment facility can be diagnosed from the viewpoint of appropriateness, excess or insufficiency with respect to each of the inflow load amount, the activated sludge amount, and the oxygen amount. The operation management method for a wastewater treatment facility of the present invention is characterized by increasing or decreasing an oxygen amount, increasing or decreasing an extracted sludge amount, and/or increasing or decreasing an inflow load amount, based on a diagnosis result obtained by the diagnostic method of the present invention described above. According to the diagnostic method for a wastewater treatment facility of the present invention, since a diagnosis result is shown from the viewpoint of appropriateness, excess or insufficiency with respect to each of an inflow load amount, an activated sludge amount and an oxygen amount, in accordance with the result, it can be easily determined which countermeasure to select from among the countermeasures of increasing or decreasing the oxygen amount, increasing or decreasing the extracted sludge amount, and increasing or decreasing the inflow load amount. Further, the number of countermeasures is not necessarily limited to one kind, and there are also cases where multiple countermeasures are taken.

In the operation management system of the present invention, the storage means for storing the reference values, the input means for inputting the measured values, the comparison means, the storage means for storing the diagnostic patterns, the checking means, and the display means for displaying the diagnostic patterns may be incorporated into a single apparatus, for example, a personal computer, or a configuration may be adopted in which the input means for inputting the measured values and the display means for displaying the diagnostic patterns are incorporated into a terminal such as a tablet, and the other means are incorporated into a server or the like, and the terminal and the server or the like communicatively connect with each other to exchange data. A device or the like that is used as the storage means in the present invention is not particularly limited, and a database, a server, a random access memory (RAM), a read only memory (ROM), a hard disk (HD), an optical disk, and a floppy (registered trademark) disk (FD) can be mentioned as examples thereof. A device or the like that is used as the input means in the present invention is not particularly limited, and for example an input device that is normally used by connecting to a computer or the like can be used. Devices or the like that are used as the comparison means and the checking means in the present invention are not particularly limited, and a central processing unit (CPU) that performs predetermined processing based on a program stored in a storage device can be mentioned as an example thereof. A device or the like used as the display means in the present invention is not particularly limited, and for example, various displays such as a liquid crystal display can be used.

The operation management apparatus for a wastewater treatment facility of the present invention is characterized by comprising an input device that inputs a reference value for each index of a plurality of indexes indicating a state of an aeration tank, and a storage device that stores the input reference value; an input device that inputs a measured value of the index and a storage device that stores the input measured value; a comparison means for comparing the input and stored measured value with the reference value for each index, and categorizing each measured value as one of being within a reference value range, over the reference value, or less than the reference value; a storage device that stores a diagnostic pattern, in which the diagnostic patterns are classified according to a combination of categories of: within the reference value range, over the reference value, or less than the reference value for each index, using the reference value as a reference; a checking means for checking a combination of categories of each index of the measured values against a combination of categories of each index of the diagnostic patterns, and extracting a diagnostic pattern which the combination of categories has matched; and a display device that displays the diagnostic pattern which the combination of categories has matched. The input devices, the storage devices, the display device, the comparison means and the checking means in the operation management apparatus for a wastewater treatment facility of the present invention are the same as those described above with respect to the operation management system of the present invention. In the operation management apparatus of the present invention, the various input devices, storage devices, display device, comparison means and checking means may be incorporated into a single apparatus, for example, a personal computer, or the input devices and the display device may be connected to the main body of a personal computer. Further, a configuration may be adopted in which the input device that inputs the measured values of the indexes and the display device that displays the diagnostic patterns are, for example, incorporated into a portable terminal such as a tablet terminal, and the other devices and means are incorporated into a server or the like, and the terminal and the server or the like communicatively connect with each other to exchange data.

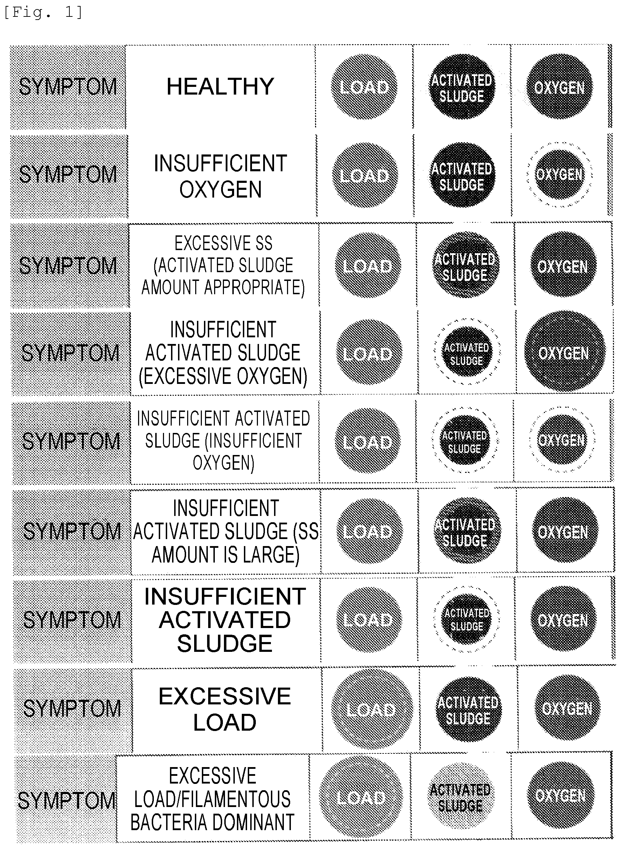

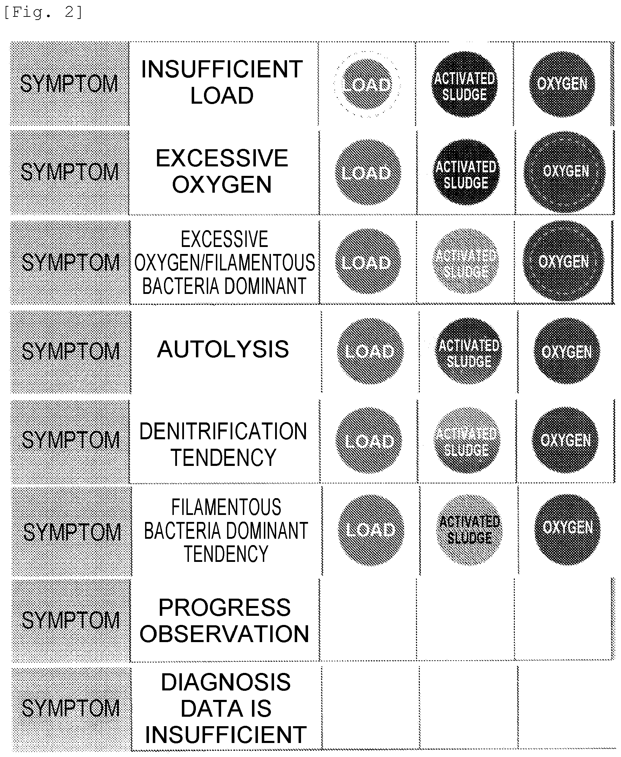

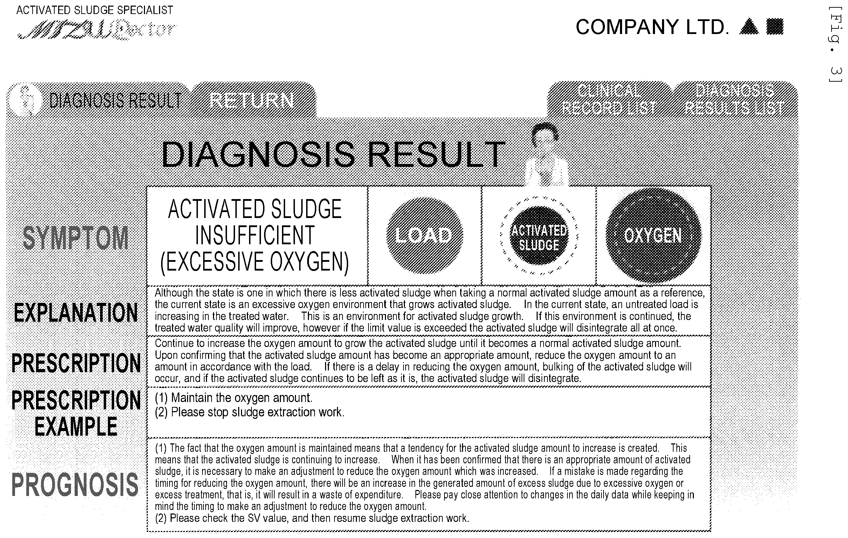

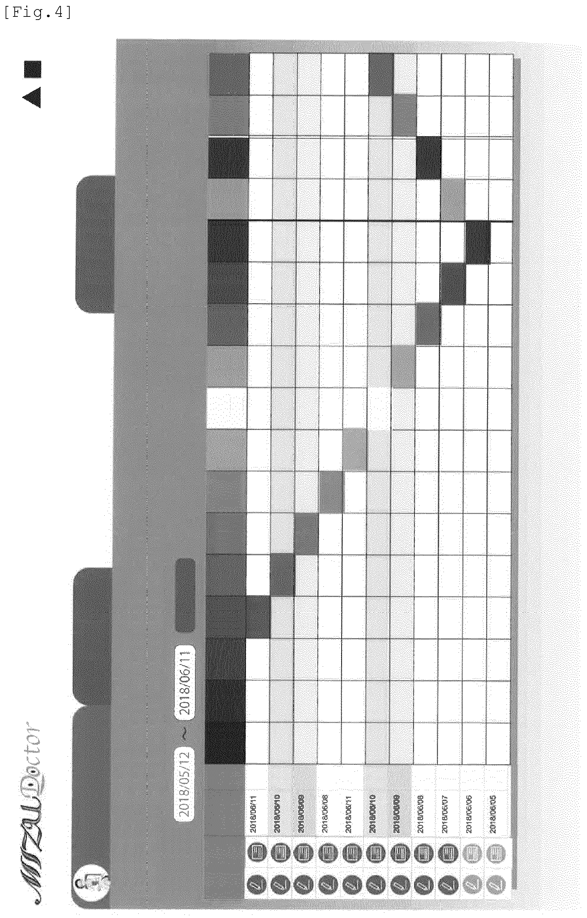

Hereunder, one embodiment of the operation management system for a wastewater treatment facility of the present invention will be described. In the present operation management system, the storage means for storing the reference values (also referred to as an "appropriate value") of a plurality of indexes indicating a state of an aeration tank can store the reference values with respect to, at least, SV30, an SV comparative difference, SV 24 hours, pH (nitrogen component is large), pH (nitrogen component is small), ORP, sludge ORP, and transparency. Further, the input means can input measurement results and observation results with respect to SV30, an SV comparative difference, SV 24 hours, SV 24-hours external appearance (from the viewpoint of denitrification), SV 24-hours external appearance (from the viewpoint of filamentous bacteria), pH (nitrogen component is large), pH (nitrogen component is small), ORP, sludge ORP, and transparency. In the present operation management system, the diagnostic patterns are classified into 15 patterns, namely, [excessive load/filamentous bacteria dominant], [excessive load], [insufficient activated sludge], [insufficient activated sludge (SS amount is large)], [insufficient activated sludge (insufficient oxygen)], [insufficient activated sludge (excessive oxygen)], [excessive SS (activated sludge amount appropriate)], [insufficient oxygen], [healthy], [insufficient load], [excessive oxygen], [excessive oxygen/filamentous bacteria dominant], [autolysis], [denitrification tendency], and [filamentous bacteria dominant tendency], according to combinations of categories of "appropriate", "more than", or "less than" of the respective indexes and combinations of states with regard to the SV 24-hours external appearance. Further, a classification of [progress observation] is also provided for cases which do not correspond to the aforementioned 15 patterns, and a classification of [insufficient data] is provided for a case where the measurement items are insufficient. In the present operation management system, it is preferable to use measured values relating to three or more of the indexes (four or more when the SV 24-hours external appearance is included), and in a case where the measured values are less than that, the resulting diagnostic pattern is classified as [insufficient data]. In the present operation management system, the measured values are input using a personal computer (PC) or a tablet or the like that can transmit and receive data to and from a server, and a display of the diagnostic patterns can be viewed. Therefore, at the site of the wastewater treatment facility, the utilizer can input the measured values and view the diagnostic patterns. Further, one server can process data from a plurality of wastewater treatment facilities. In the present operation management system, first, a reference value of each index is set, and the set reference values are input from a PC, a tablet, or the like connected to the server. At the site of the wastewater treatment facility, when the utilizer inputs the measured values for each index into a PC, a tablet terminal or the like, the data that is input is transmitted to the server, and the transmitted data is then compared with the reference values and categorized as one of "appropriate", "more than" and "less than". This combination of categories is checked against combinations of categories which the diagnostic patterns have, and a matching diagnostic pattern is extracted. The extracted diagnostic pattern can be seen by the utilizer at the site of the wastewater treatment facility by means of a PC, a tablet terminal or the like. As shown in Figures 1 and 2 as "symptom", the display of the diagnostic patterns in the present operation management system is displayed with words and a diagram showing whether each of the inflow load amount, the activated sludge amount, and the oxygen amount is appropriate, excessive, or insufficient. In Figures 1 and 2, a "load" circle represents the state of the inflow load amount, an "activated sludge" circle represents the state of the activated sludge, and an "oxygen" circle represents the state of the oxygen amount. In addition, in the present operation management system, as illustrated in Figure 3, "explanation", "prescription (future countermeasure method)", "prescription example", and "prognosis" of the symptom are displayed. Further, in the present operation management system, as illustrated in Figure 4, a tabulated list in which daily changes in a diagnostic pattern can be seen is also displayed. The utilizer of the present operation management system can see the displayed "symptom" as well as the "prescription" and "prescription example" and can implement a countermeasure, and can also see the "prognosis" and know the expected situation as well as points to keep in mind in the future. In the present operation management system, factors relating to weather conditions such as weather, temperature, humidity, and precipitation are input to the operation management system automatically by linking with a weather forecasting company and receiving data from that company.

### Industrial Applicability

The operation management system for a wastewater treatment facility, diagnostic method for a wastewater treatment facility, and operation management method for a wastewater treatment facility of the present invention can be suitably applied to various wastewater treatment facilities which have different kinds of inflow loads, and can accurately ascertain a health condition of sludge. The appropriate measures to take according to the state of activated sludge can also be known.

## Claims

1. An operation management system for a wastewater treatment facility, comprising:
a storage means for storing a reference value for each index of a plurality of indexes indicating a state of an aeration tank;
an input means for inputting a measured value of the index;
a comparison means for comparing the input measured value with the reference value for each index, and categorizing each measured value as one of being within a reference value range, over the reference value, or less than the reference value;
a storage means for storing diagnostic patterns, in which the diagnostic patterns are classified according to a combination of categories of: within the reference value range, over the reference value, or less than the reference value for each index, using the reference value as a reference;
a checking means for checking a combination of categories of each index of the measured values against a combination of categories of each index of the diagnostic patterns, and extracting a diagnostic pattern which the combination of categories has matched; and
a display means for displaying the diagnostic pattern which the combination of categories has matched.

2. The operation management system according to claim 1, wherein the plurality of indexes indicating a state of an aeration tank are two or more selected from SV30, SV comparative difference, SV 24 hours, pH, ORP, sludge ORP, and transparency level.

3. The operation management system according to claim 1 or 2, wherein the diagnostic patterns are classified from a viewpoint of appropriateness, excess or insufficiency for each of inflow load amount, activated sludge amount, and oxygen amount.

4. The operation management system according to any one of claims 1 to 3, wherein SV external appearance observation is included as an index.

5. The operation management system according to any one of claims 1 to 4, wherein a display of the diagnostic pattern includes a display of appropriateness, excess or insufficiency for each of inflow load amount, activated sludge amount and oxygen amount.

6. The operation management system according to any one of claims 1 to 5, wherein the display of the diagnostic pattern includes a display of a future countermeasure method that is set for each diagnostic pattern.

7. A diagnostic method for a wastewater treatment facility, comprising:
a step of setting a reference value for each index of a plurality of indexes indicating a state of an aeration tank;
a step of taking the reference value as a reference, and setting diagnostic patterns that are classified according to a combination of categories of being within a reference value range, over the reference value, or less than the reference value for each index;
a step of measuring the index and obtaining a measured value;
a step of comparing the obtained measured value with the reference value for each index, and categorizing each measured value as one of being within the reference value range, over the reference value, or less than the reference value;
a step of checking a combination of categories of each index of the measured value against a combination of categories of each index of the diagnostic patterns; and
a step of adopting a diagnostic pattern which combinations of categories have matched in the checking step, as a diagnosis result.

8. A diagnostic method for a wastewater treatment facility, comprising:
a step of selecting at least three from SV30, SV comparative difference, SV 24 hours, pH, ORP, sludge ORP, and transparency as index indicating a state of an aeration tank;
a step of setting a reference value for the selected indexes;
a step of measuring the selected indexes and obtaining measured values;
a step of comparing the obtained measured values with the reference value for each index and categorizing each measured value into one of being within a reference value range, over the reference value, or less than the reference value;
a step of selecting one or more of: excessive load, appropriate load, insufficient load, excessive sludge amount, appropriate sludge amount, insufficient sludge amount, excessive oxygen, appropriate oxygen amount, and insufficient oxygen, as a possibility indicated by each index from the categories; and
a step diagnosing a state of the wastewater treatment facility from a viewpoint of appropriateness, excess or insufficiency of each of inflow load amount, activated sludge amount and oxygen amount, by considering the possibilities selected for each index as a whole.

9. An operation management method for a wastewater treatment facility, comprising increasing or decreasing an oxygen amount, increasing or decreasing an extracted sludge amount, and/or increasing or decreasing an inflow load amount, based on a diagnosis result obtained by the diagnostic method according to claim 7 or 8.

10. An operation management apparatus for a wastewater treatment facility, comprising:
an input device that inputs a reference value for each index of a plurality of indexes indicating a state of an aeration tank, and a storage device that stores the input reference value;
an input device that inputs a measured value of the index and a storage device that stores the input measured value;
a comparison means for comparing the input and stored measured value with the reference value for each index, and categorizing each measured value as one of being within a reference value range, over the reference value, or less than the reference value;
a storage device that stores a diagnostic pattern, in which the diagnostic patterns are classified according to a combination of categories of: within the reference value range, over the reference value, or less than the reference value for each index, using the reference value as a reference;
a checking means for checking a combination of categories of each index of the measured values against a combination of categories of each index of the diagnostic patterns, and extracting a diagnostic pattern which the combination of categories has matched; and
a display device that displays the diagnostic pattern which the combination of categories has matched.
